# EUROPÄISCHE PATENTSCHRIFT

(11) **EP 1 454 285 B1**
(45) Veröffentlichungstag und Bekanntmachung des Hinweises auf die Patenterteilung: **20.09.2006**
(21) Anmeldenummer: 02779177.1
(22) Anmeldetag: 25.10.2002
(51) Int. Cl.: G06K 9/00, G08B 13/196

(54) **VIDEOÜBERWACHUNGSSYSTEM MIT OBJEKTMASKIERUNG**
VIDEO MONITORING SYSTEM WITH OBJECT MASKING
SYSTEME DE SURVEILLANCE VIDEO AVEC MASQUAGE D'OBJETS

(30) Priorität: 30.11.2001 DE 10158990
(43) Veröffentlichungstag der Anmeldung: 08.09.2004
(73) Patentinhaber: ROBERT BOSCH GMBH, 70442 Stuttgart (DE)
(72) Erfinder: ROTTMANN, Frank, 81667 München (DE)
(86) Internationale Anmeldenummer: PCT/DE2002/004012
(87) Internationale Veröffentlichungsnummer: WO 2003/049009

(56) Entgegenhaltungen:
- EP-A- 1 081 955
- EP-A- 1 107 166
- WO-A-03/010728
- DE-A- 10 001 252
- HASEGAWA O ET AL: "Real-time parallel and cooperative recognition of facial images for an interactive visual human interface" PROCEEDINGS OF THE IAPR INTERNATIONAL CONFERENCE ON PATTERN RECOGNITION. JERUSALEM, OCT. 9 - 13, 1994. CONFERENCE C: SIGNAL PROCESSING / CONFERENCE D: PARALLEL COMPUTING, LOS ALAMITOS, IEEE COMP. SOC. PRESS, US , XP010216422

## Beschreibung

### Stand der Technik

Die Erfindung geht aus von einem Videoüberwachungssystem nach der Gattung des unabhängigen Patentanspruchs.

Aus der Offenlegungsschrift DE 197 39 482 A1 ist ein Videoüberwachungssystem bekannt, das bei Bedarf aktiviert wird. Liegt kein Bedarf vor, dann ist entweder eine Blende vor der Kamera des Videoüberwachungssystems, oder es erfolgt eine generelle Unscharfschaltung der beobachteten Szene.

Die EP-A-1 107 166 offenbart ein Überwachungssystem, bei dem eine Gesichtsregion erkannt und durch Ersetzen durch ein anderes (generisches) Gesicht maskiert wird.

Die EP-A-1 081 955 offenbart eine Überwachungsanlage, in der eine Bildregion ausgeblendet wird, deren Position im voraus bekannt ist. Eine autorisierte Person kann die Maskierungsdaten löschen; somit wird die maskierte Region wieder vollständig gezeigt.

### Vorteile der Erfindung

Das erfindungsgemäße Videoüberwachungssystem mit den Merkmalen des unabhängigen Patentanspruchs hat demgegenüber den Vorteil, daß nun einzelne Objekte in einer Szene lokalisiert werden und in Abhängigkeit von Vorgaben einzelne Objekte in der Kameraszene maskiert werden. Eine Freischaltung der Maskierung erfolgt dann in Abhängigkeit eines vorgegebenen Ereignisses. Um eine der Öffentlichkeit akzeptable Überwachung mit Kameras zu ermöglichen, ist die Nutzung des erfindungsgemäßen Videoüberwachungssystem zu empfehlen, das die Identifizierung von Privatpersonen unterbindet. Damit werden insbesondere auch sich bewegende Objekte dynamisch und bildgenau maskiert. Die exakte Maskierung der Objekte erlaubt eine bessere Szenenübersicht und damit eine detaillierte Darstellung von Ereignissen und Handlungsweisen. Alle Handlungen sind nachvollziehbar, ohne die Identität der Person offenzulegen und damit in die Privatsphäre einzugreifen. Insbesondere durch dieses Verfahren erscheint es arbeitsrechtlich allgemein möglich, Arbeitsplätze von Mitarbeitern, beispielsweise im Geldgewerbe, zu überwachen. Diese Maskierung kann die komplette Szene bei Eintritt eines Objekts erfassen oder einen Teilbereich der Szene oder alle bewegten Objekte oder ein bestimmtes Objekt wie auch Teilbereiche auf diesem Objekt. Wobei eine Person beispielsweise aus mehreren Teilobjekten zusammengesetzt sein kann. Dabei ist es dann möglich, das Gesicht als ein besonderes Objekt zu definieren oder auch die Augenpartie und den Rumpf und die Beine als weitere Objekte zu erfassen. Bei Fahrzeugen kann das Kennzeichen identifiziert und abgedeckt werden.

Die Maskierung kann an der Kamera direkt bei der Digitalisierung des Kamerasignals, vor der Bilderfassung und Kompression, vor der Bildspeicherung oder vor der Wiedergabe im Anzeigesystem erfolgen.

Durch die in den abhängigen Ansprüchen aufgeführten Maßnahmen und Weiterbildungen sind vorteilhafte Verbesserungen des im unabhängigen Patentanspruch angegebenen Videoüberwachungssystems möglich.

Besonders vorteilhaft ist, daß die Mittel zur Maskierung das wenigstens eine Objekt mit einem einheitlichen Farb- oder Grauton belegen. Damit sind dann nur die Konturen des maskierten Objekts auf der Anzeige des Videoüberwachungssystems sichtbar.

Weiterhin ist es von Vorteil, daß das Ereignis, bei dem die Demaskierung des maskierten Objekts vorgenommen wird, entweder ein vorgegebener Zeitpunkt ist und/oder durch eine Eingabe an einer Eingabevorrichtung des Videoüberwachungssystems erreicht wird. Diese Eingabe kann dann eine Autorisierung bzw. Legitimation sein, also ein Code, der entweder manuell oder durch Sprache eingegeben wird. Auch als Eingabe wird hier verstanden, wenn eine betreffende Person von dem Videoüberwachungssystem als legitimiert durch biometrische Meßverfahren erkannt wird. Zu diesen biometrischen Meßverfahren gehören Fingerabdrücke, biometrische Meßverfahren der Augen bzw. Bilderkennung der Person an sich. Aber auch eine Spracherkennung gehört hier dazu. Dies kann dahingehend erweitert werden, daß diese Demaskierung nur bei der Anwesenheit von zwei Betrachtern, die sich jeweils legitimieren müssen, erfolgt.

Darüber hinaus ist es von Vorteil, daß das erfindungsgemäße Videoüberwachungssystem auch eine Kombination aus stationären und beweglichen Kameras aufweist. Solche Schwenk-Neigekameras werden zur Objektverfolgung bzw. zur vergrößerten Betrachtung von Szenenausschnitten verwendet. Über den Drehwinkel der beweglichen Kamera erfolgt dann die Maskierung anhand des stationären Übersichtsbildes, so daß die Maskierung immer mitgeführt wird. Damit können Positionen beweglicher Objekte bildpunktgenau ausmaskiert werden. Die bewegliche Kamera wird dabei mit der stationären Kamera kombiniert und so eingerichtet, daß sich eine eindeutige Abbildungsvorschrift für alle anfahrbaren Positionen der Schwenk-Neigekamera aus dem Übersichtsbild der stationären Kamera ergibt. Damit wird anhand der bereitsgefundenen Objektmaske des bewegten Objekts das Kamerabild maskiert, so daß keine Identifizierung möglich ist. Dazu wird die Sicht der zweiten stationären Kamera auf die schwenkbare Kamera abgebildet.

Die Objektidentifizierung erfolgt durch den Prozessor anhand einer Farbverteilung und/oder einer geometrischen Form und/oder einer Beziehung der ersten geometrischen Form zu einer zweiten geometrischen Form und/oder einer Grauwert- oder Texturinformation.

Die Lokalisierung des Objektes im Kamerabild erfolgt durch die bekannten Verfahren der Objektsegmentierung in Bildfolgen stationärer Kameras. Durch eine Speicherung eines Kamerabildes eines zurückliegenden Zeitpunktes wird im wesentlichen die Szene ohne jegliches bewegtes Objekt dargestellt. Bei diesem spricht man auch von dem Referenzbild. Durch eine Differenzbildung zwischen aktuellem und Referenzbild kann eine Aussage über die Positionen anwesender Objekte getroffen werden. Durch ein Verfahren der Binärisierung und Segmentierung lässt sich eine bildpunktgenauen Maske pro Objekt extrahieren. Neu an dem dargestellten Verfahren ist die Verwendung der Objektmaske zur Maskierung des Kamerabildes.

### Zeichnung

Ausführungsbeispiele der Erfindung sind in der Zeichnung dargestellt und werden in der nachfolgenden Beschreibung näher erläutert. Es zeigen Figur 1 ein Blockschaltbild des erfindungsgemäßen Videoüberwachungssystems, Figur 2 die Maskierung eines Kennzeichens und Figur 3 die Maskierung des Gesichts einer Person.

### Beschreibung

Bei der Überwachung von Arealen, insbesondere in öffentlichen Räumen oder Bereichen, die an öffentliche Verkehrsflächen angrenzen, besteht das Problem der Wahrung und des Schutzes der Privatsphäre der beteiligten Personen.

Weitere Anwendungen für die Videoüberwachung finden sich in Arbeitsbereichen, die ein Nachvollziehen und Überwachen von Handlungen und Verhaltensweisen voraussetzen, jedoch keine Identifizierung von Personen im ersten Schritt erlauben. Erst bei einem konkreten Tatverdacht, beispielsweise bei der Begehung illegaler Handlungen, kann der Schutz der Identität mit Hilfe der richtigen Legitimation aufgehoben werden. Erfindungsgemäß wird dies nun dadurch erreicht, daß einzelne Objekte in einer überwachten Szene durch das erfindungsgemäße Videoüberwachungssystem maskiert werden.

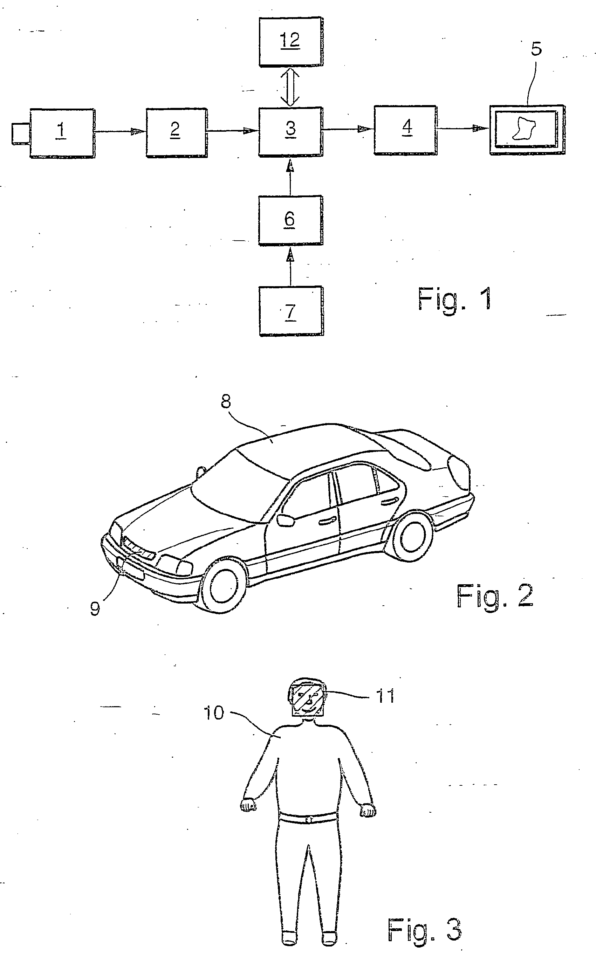

Figur 1 zeigt als Blockschaltbild das erfindungsgemäße Videoüberwachungssystem. Eine Kamera 1 ist hier an eine Signalverarbeitung 2 angeschlossen, die an einen ersten Dateneingang eines Prozessors 3 angeschlossen ist. An einen zweiten Dateneingang des Prozessors 3 ist eine Signalverarbeitung 6 angeschlossen, an die wiederum eine Eingabevorrichtung 7 angeschlossen ist. Über einen Datenein/-ausgang ist der Prozessor 3 mit einem Speicher 12 verbunden. Über einen Datenausgang ist der Prozessor 3 mit einer Ansteuerung 4 verbunden, die eine Anzeige 5 ansteuert, auf der die überwachte Szene dargestellt wird.

Beispielhaft ist hier nur eine Kamera 1 dargestellt. Es können jedoch auch Kombinationen aus unterschiedlichen Kameratypen oder mehrere Kameras, die beispielsweise auch über einen Bus verbunden sind, angeschlossen sein. Als Kameratypen sind neben normalen Videokameras auch Infrarotkameras oder andere Wärmebildkameras möglich. Auch Kombinationen aus Videokameras und Wärmebildkameras sind hier einsetzbar. Die Kameras sind weiterhin beweglich und/oder stationär. Durch bewegliche Kameras ist die Objektverfolgung möglich. Die Signalverarbeitung 2 verarbeitet die Kamerasignale, die von der Kamera 1 kommen und bereitet sie für die Verarbeitung im Prozessor 3 auf. Prozessor 3 führt eine Objekterkennung mit im Speicher 12 abgespeicherten Objekten durch, um gegebenenfalls einzelne Objekte zu maskieren. Diese Maskierung erfolgt hier durch einen homogenen Grautonbelag. Es ist auch möglich, eine Farbe zu verwenden oder dies farblos zu halten. Die Szene aus den einzelnen Objekten wird dann an die Ansteuerung 4 übertragen, die damit die Anzeige 5 ansteuert. Es ist auch möglich, daß hier mehr als eine Anzeige angesteuert wird. Die Anzeige 5 ist hier ein normaler Bildschirm. Es sind jedoch auch Flachbildschirme und andere Anzeigetechniken möglich. Die Übertragung an die Anzeige 5 kann auch über das Internet oder andere Datenleitungen erfolgen. Es ist also möglich, daß die Anzeige 5 örtlich getrennt von der Kamera 1 ist, beispielsweise in einer Überwachungsstation eines Sicherheitsdienstes.

Mit der Eingabevorrichtung 7, deren Signal dann von der Ansteuerung 6 vorverarbeitet für den Prozessor 3 werden, wird eine Legitimation eingegeben, um eine Demaskierung der maskierten Objekte zu erreichen. Die Demaskierung wird -insbesondere dann erfolgen, wenn die Gefahr von illegalen Handlungen durch die Beobachtung der Szene nahegelegt ist. Dies kann automatisch erkannt werden, durch Objekterkennung oder auch durch Beobachter. Auch eine Alarmierung von anderen Sensoren kann hier verwendet werden.

Die Legitimation kann durch Eingabe eines Codes, durch eine Personenerkennung oder durch eine Spracherkennung oder, wie oben dargestellt, durch die Verwendung von biometrischen Verfahren erfolgen. Es kann auch möglich sein, daß die Demaskierung der Objekte nur dann erfolgt, wenn zwei getrennte Personen sich unterschiedlich legitimieren. Damit wird insbesondere ein Mißbrauch erschwert. Als Eingabevorrichtung 7 kann demnach eine Tastatur, ein Mikrofon oder eine biometrische Meßeinrichtung wie ein Fingerabdrucksensor mit angeschlossener Elektronik wirken.

Figur 2 zeigt eine Maskierung eines Pkws 8, bei dem ein Kennzeichen 9 durch einen Grauschleier maskiert wird. Damit ist die Identifizierung des Fahrzeugs nicht möglich. Die Privatsphäre des Fahrzeughalters ist damit gewährleistet. Figur 3 zeigt ein weiteres Beispiel, bei dem die Gesichtspartie 11 einer Person 10 maskiert wird. Damit ist die Identifikation der Person so nicht direkt möglich. Erst durch die Eingabe der Legitimation ist die Demaskierung für die Überwachung möglich.

## Patentansprüche

1. Videoüberwachungssystem, wobei das Videoüberwachungssystem wenigstens eine Kamera (1) zur Überwachung einer Szene, einen Prozessor (3), der ein Kamerasignal verarbeitet und eine Anzeige (5) zur Wiedergabe der überwachten Szene aufweist, wobei der Prozessor (3) wenigstens ein Objekt in der Szene identifiziert und das Videoüberwachungssystem Mittel zur Maskierung des wenigstens einen Objekts in der Szene aufweist, **dadurch gekennzeichnet, daß** eine Entmaskierung in Abhängigkeit eines vorgegebenen Ereignisses erfolgt und daß das Videoüberwachungssystem wenigstens eine stationäre Kamera zur Aufnahme einer Übersicht der Szene und wenigstens eine bewegliche Kamera zur Aufnahme eines Ausschnitts der Szene aufweist, wobei die Maskierung aus der mit der stationären Kamera aufgenommenen Szene in die durch die bewegliche Kamera aufgenommene Szene übernommen wird.

2. Videoüberwachungssystem nach Anspruch 1, **dadurch gekennzeichnet, daß** die Mittel zur Maskierung das wenigstens eine Objekt mit einem einheitlichen Farb- oder Grauton belegen.

3. Videoüberwaehungssystem nach Anspruch 1 oder 2, **dadurch gekennzeichnet, daß** das Ereignis ein vorgegebener Zeitpunkt und/oder eine Eingabe an einer Eingabevorrichtung (7) des Videoüberwachungssystem ist.

4. Videoüberwachungssystem nach Anspruch 3, **dadurch gekennzeichnet, daß** die Eingabe eine Autorisierung und/oder Legitimation ist.

5. Videoüberwachungssystem nach einem der vorhergehenden Ansprüche, **dadurch gekennzeichnet, daß** der Prozessor (3) die Objektidentifikation anhand einer Farbverteilung und/oder einer ersten geometrischen Form und/oder einer Beziehung der ersten geometrischen Form zu einer zweiten geometrischen Form und/oder einer Grauwert oder Texturinformation durchführt.

## Claims

1. Video monitoring system, in which the video monitoring system has at least one camera (1) for monitoring a scene, a processor (3) which process a camera signal, and a display (5) for reproduction of the monitored scene, in which the processor (3) identifies at least one object in the scene and the video monitoring system has means for masking the at least one object in the scene, **characterized in that** unmasking is carried out as a function of a predetermined event, and **in that** the video monitoring system has at least one stationary camera for recording an overview of the scene and at least one moving camera for recording a detail of this scene, with the masking being transferred from the scene recorded by the stationary camera to the scene recorded by the moving camera.

2. Video monitoring system according to Claim 1, **characterized in that** the means for masking cover the at least one object with a standard colour or grey tone.

3. Video monitoring system according to Claim 1 or 2, **characterized in that** the event is a predetermined time and/or an input on an input apparatus (7) in the video monitoring system.

4. Video monitoring system according to Claim 3, **characterized in that** the input is an authorization and/or legitimation.

5. Video monitoring system according to one of the preceding claims, **characterized in that** the processor (3) carries out the object identification on the basis of a colour distribution and/or a first geometric shape and/or a relationship between the first geometric shape and a second geometric shape, and/or a grey level or texture information.

## Revendications

1. Système de surveillance vidéo, le système de surveillance vidéo présentant au moins une caméra (1) pour la surveillance d'une scène, un processeur (3) qui traite un signal de caméra et un affichage (5) pour la restitution de la scène surveillée, le processeur (3) identifiant au mois un objet dans la scène et le système de surveillance vidéo présentant des moyens de masquage d'au moins un objet dans la scène,
**caractérisé en ce qu'**
un démasquage s'effectue en fonction d'un événement prédéterminé, et le système de surveillance vidéo présente au moins une caméra stationnaire pour la prise d'une vue de la scène et au moins une caméra mobile pour la prise d'un détail de la scène, le masquage étant réalisé à partir de la scène prise à l'aide de la caméra stationnaire dans la scène prise par la caméra mobile.

2. Système de surveillance vidéo selon la revendication 1,
**caractérisé en ce que**
les moyens de masquage couvrent au moins un objet avec un ton coloré ou gris uni.

3. Système de surveillance vidéo selon la revendication 1 ou 2,
**caractérisé en ce que**
l'événement est un moment prédéterminé et/ou une entrée au niveau d'un dispositif d'entrée (7) du système de surveillance vidéo.

4. Système de surveillance vidéo selon la revendication 3,
**caractérisé en ce que**
l'entrée est une autorisation et/ ou une légitimation.

5. Système de surveillance vidéo selon l'une des revendications précédentes,
**caractérisé en ce que**
le processeur (3) réalise l'identification d'objet à l'aide d'une répartition des couleurs et/ou d'une première forme géométrique et/ou d'une relation entre la première forme géométrique et une deuxième forme géométrique et/ou d'une valeur de gris ou information de texture.
